**Europäisches Patentamt**

**European Patent Office**

**Office européen des brevets**

(19)

(11) Veröffentlichungsnummer: **0 069 898**
**B1**

(12) # EUROPÄISCHE PATENTSCHRIFT

(45) Veröffentlichungstag der Patentschrift:
08.01.86

(51) Int. Cl.⁴: **A 01 D 45/02,** A 01 D 45/00

(21) Anmeldenummer: **82105669.4**

(22) Anmeldetag: **28.06.82**

(54) **Mehrreihige Erntemaschine, insbesondere für Mais.**

(30) Priorität: **10.07.81 DE 3127388**

(43) Veröffentlichungstag der Anmeldung:
**19.01.83 Patentblatt 83/3**

(45) Bekanntmachung des Hinweises auf die Patenterteilung:
**08.01.86 Patentblatt 86/2**

(84) Benannte Vertragsstaaten:
**AT CH DE FR LI**

(56) Entgegenhaltungen:
**DE - A - 2 612 857**
**DE - A - 2 900 552**
**DE - A - 2 900 554**
**FR - A - 2 408 293**

(73) Patentinhaber: **Alois Pöttinger Maschinenfabrik GmbH,
A-4710 Grieskirchen (AT)**

(72) Erfinder: **Wassermaier, Hubert, Schaunbergerstrasse 11,
A-4701 Bad Schallerbach (AT)**

(74) Vertreter: **Dupal, Helmut, Dipl-Ing., Jägerweg 12,
A-4702 Wallern (AT)**

ACTORUM AG

## Beschreibung

Die Erfindung betrifft eine mehrreihige Erntemaschine für stengeliges Halmgut, insbesondere für Mais, mit mehreren von Halmteilern gebildeten Aufnahmespalten, in denen abgabeseitig je eine Aufnahmetrommel vorgesehen ist, die wenigstens zwei übereinander angeordnete, mit Mitnehmern ausgerüstete Aufnahmescheiben sowie eine untere Schneideinrichtung für das Halmgut hat, wobei je zwei der Aufnahmetrommel (14) paarweise gegensinnig rotieren und das abgeschnittene und erfasste Halmgut aus zwei nebeneinanderliegenden Aufnahmespalten zusammenführen zu zwei nachgeschalteten, aufrechtstehenden Einzugswalzen, die zwischen sich einen Einzugsspalt bilden, und mit einer Abstreifeinrichtung zum Ablösen des erfassten Halmgutes von den Aufnahmescheiben.

Bei einer zweireihigen Erntemaschine dieser Bauart, wie sie aus der DE-A 2 900 552 bekannt ist, tragen die Aufnahmetrommeln zwei obere, voneinander beabstandete Aufnahmescheiben sowie einen unteren Messerstern, der zusammen mit einem Gegenmesser die Pflanzen kurz über dem Boden abtrennt. Die beiden Aufnahmescheiben dienen zum Erfassen und Fördern der abgetrennten Pflanzen, wobei die Mitnehmer der unteren Aufnahmescheibe geringere Abstände voneinander aufweisen als die Mitnehmer der oberen Aufnahmescheibe; das hat den Zweck, dass die untere Aufnahmescheibe vor allem die Stengel sicher erfasst und fördert, während die obere Aufnahmescheibe mehr zur Führung der Stengel dient. An der der Fahrtrichtung abgewandten Seite übergibt jede Aufnahmetrommel das Halmgut an die nachgeschaltete Einzugswalze, die das Halmgut erfasst, worauf dieses durch den Einzugsspalt zwischen den beiden Einzugswalzen hindurch in eine Einzugsvorrichtung eines Häckslers gelangt.

Um die Übergabe des Halmgutes zu verbessern und um zu verhindern, dass dieses von den rotierenden Aufnahmetrommeln wieder zurückgefördert wird, ohne dass es von den Einzugswalzen erfasst worden ist, sind bei der bekannten Erntemaschine zwischen allen Aufnahmescheiben und zwischen der untersten Aufnahmescheibe und dem Messerstern jeder Aufnahmetrommel Abstreifer angebracht, die sich von der Befestigungsstelle der Abstreifer vor der Aufnahmetrommel bis in den Bereich hinter derselben, zwischen zwei Aufnahmetrommeln und vor den beiden Einzugswalzen erstrecken.

Bei dieser bekannten Erntemaschine kann es insbesondere bei unebenen Bodenverhältnissen vorkommen, dass nicht nur abgeschnittenes Halmgut in den Einzugsspalt gelangt, sondern auch Erdbrocken, die zusammen mit den unteren Stengelenden herausgerissen worden sind und nun durch die Abstreifer zwischen dem Messerstern und der darüberliegenden Aufnahmescheibe in den Einzugsspalt gedrückt werden, wodurch dieser nach kurzer Zeit verstopft wird.

Auch können dabei die Abstreifer beschädigt werden.

Der Erfindung liegt die Aufgabe zugrunde, eine mehrreihige Erntemaschine der eingangs erläuterten Gattung so zu verbessern, dass das Eindringen von Fremdkörpern wie Erdklumpen, Steine oder Wurzelwerk in den Einzugsspalt zwischen den Einzugswalzen weitgehend vermieden wird, so dass das abgeschnittene Halmgut zuverlässig und störungsfrei in diesen hineingezogen wird.

Erfindungsgemäss wird diese Aufgabe dadurch gelöst, dass als Abstreifeinrichtung nur zwischen den oberen Aufnahmescheiben jeder Aufnahmetrommel im wesentlichen S-förmig gebogene Abstreifer vorgesehen sind, die vom Mantel der Trommel ausgehen und in den Einzugsspalt hineinführen.

Auf diese Weise wird erreicht, dass an den unteren Stengelenden anhaftendes Erdreich oder dergleichen nicht zu dem Einzugsspalt hin abgelenkt wird, sondern in dem Raum zwischen der unteren Aufnahmescheibe und der darunter angeordneten Schneideinrichtung (Messerstern) entgegengesetzt zur Fahrtrichtung der Erntemaschine zurückgefördert und durch die Drehgeschwindigkeit der Aufnahmetrommeln bei normalen Bodenverhältnissen abgeschleudert wird. Die Vereinigung der Stengel zweier Erntereihen durch die paarweise angeordneten Aufnahmetrommeln und die von diesen zu dem Einzugsspalt führenden Abstreifer wird dadurch nicht beeinträchtigt. Die S-Form der Abstreifer stellt sicher, dass das abgeschnittene Halmgut bis in den Einzugsspalt hinein zuverlässig gelenkt wird, so dass es ohne weiteres von den Aufnahmetrommeln erfasst wird.

Die Fachwelt war bisher der Auffassung, dass für eine ordnungsgemässe Führung des Halmgutes zu den Einzugswalzen und zwischen dem Messerstern und der darüberliegenden Aufnahmescheibe Abstreifer vorgesehen sein müssen. Versuche mit erfindungsgemäss ausgebildeten Erntemaschinen haben jedoch gezeigt, dass das nicht erforderlich ist. Aus der DE-A 2 621 716 ist es zwar bei Feldhäckslern bekannt, nur zwischen den oberen Aufnahmescheiben bei einer Aufnahmetrommel Abstreifer vorzusehen, dort sind jedoch die Aufnahmetrommeln waagrecht angeordnet und bilden einen waagrecht verlaufenden Einzugsspalt im wesentlichen über die gesamte Breite des Einzugkanales, so dass es auf eine besondere Führung nicht ankommt, wie dies bei gattungsgemässen Erntemaschinen der Fall ist, bei denen die Aufnahmetrommeln senkrecht verlaufende Achsen haben.

Es hat sich als vorteilhaft erwiesen, wenn der Winkel zwischen dem Abstreifer und den Mitnehmern der zugehörigen Aufnahmescheiben bzw. den Tangenten an die äussere Kante der Mitnehmer immer grösser ist als 90°.

Durch diese Massnahme wird eine störungsfreie Übergabe der abgeschnittenen Halme von den Mitnehmern der Aufnahmescheiben zu den Abstreifern gewährleistet, ohne dass ein Verklemmen eintritt. Ausserdem hat sich herausgestellt, dass dadurch das Einziehen von nicht verwertbaren Stengelteilen und Unkraut zwischen Aufnahmescheiben und Abstreifer verhindert wird.

Nach einem anderen Merkmal der Erfindung ist zwischen den einen vertikalen Spalt bildenden, freien Enden von je zwei Abstreifern im Bereich des Einzugsspaltes ein aus dem Spalt herausragendes, ein geordnetes und störungsfreies Zusammenführen der beiden Halmgutströme gewährleistendes Führungsteil vorgesehen.

Dieses kann aus einem aufrechtstehenden Grundkörper und einer davon abstehenden Fahne bestehen, die aus dem vertikalen Spalt zwischen den freien Enden der beiden Abstreifer herausragt.

Das Führungsteil ist insbesondere dann von Vorteil, wenn die Aufnahmetrommeln derart schwenkbar an der Erntemaschine gelagert sind, dass eine Anpassung an unterschiedliche Reihenabstände der zu erntenden Pflanzen durchgeführt werden kann. Beim Verschwenken der Aufnahmetrommeln zueinander werden auch die freien Enden der diese Bewegung mitmachenden Abstreifer bewegt, und zwar so, dass sie an den gegenüberliegenden Flächen der Fahne entlang geschwenkt werden, so dass in keiner Stellung der Aufnahmetrommel der vertikale Spalt zwischen den freien Enden der Abstreifer zu sehr geöffnet wird. Die von den Aufnahmescheiben in den Einzugsspalt transportierten Halme werden auf diese Weise immer einwandfrei geführt, so dass das Halmgut nicht in den Spalt zwischen den freien Enden der Abstreifer gelangen kann und wieder zurückgefördert wird oder Verstopfungen hervorrufen kann.

Zur Anpassung der Aufnahmetrommeln an unterschiedliche Reihenabstände des Erntegutes ist es weiter vorteilhaft, wenn der Antrieb jeder Aufnahmetrommel von der nachgeschalteten Einzugswalze abgeleitet ist. Die Antriebsverbindung kann dabei als Zahnradgetriebe oder als Ketten- oder Riementrieb ausgebildet und in einem Gehäuse geschützt untergebracht sein, das um die Drehachse der zugeordneten Einzugswalze verschwenkbar und feststellbar angebracht ist.

Die Erfindung ist nachstehend an einem Ausführungsbeispiel erläutert, das in der Zeichnung dargestellt ist. Es zeigen:

Figur 1 eine schematische Seitenansicht einer Erntemaschine gemäss der Erfindung,

Figur 2 ausschnittsweise und in vergrössertem Massstab eine Seitenansicht einer Aufnahmetrommel mit Abstreifer und einer Einzugswalze,

Figur 3 eine Schnittdarstellung in der Ebene III-III der Figur 4 zweier paarweise zusammenarbeitender Aufnahmetrommeln, wobei die bekannten Führungen für das abgeschnittene Halmgut der besseren Übersicht wegen weggelassen sind,

Figur 4 eine Draufsicht auf die Aufnahmetrommeln und Einzugswalzen der Figur 3 und

Figur 5 einen Schnitt durch eine Aufnahmetrommel mit Schneideinrichtung in vergrössertem Massstab.

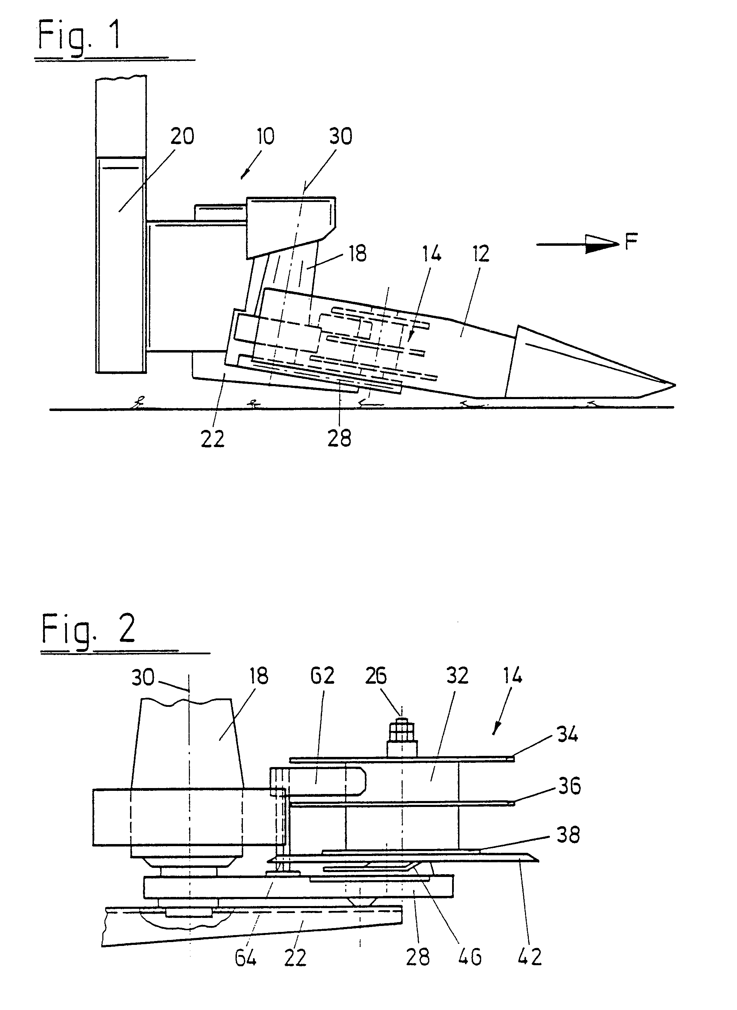

In Fig. 1 ist schematisch die Seitenansicht einer zweireihigen Erntemaschine 10 für Mais gezeigt, die in bekannter Weise seitlich an einen Schlepper gekoppelt werden kann. Die Erntemaschine 10 hat drei in Fahrtrichtung F spitz zulaufende Halmteiler 12, wodurch zwei Aufnahmespalten gebildet werden. In jedem Aufnahmespalt ist abgabeseitig, d.h. in Fahrtrichtung F hinten eine Aufnahmetrommel 14 angeordnet, die in noch zu beschreibender Weise die Pflanzen vom Boden abtrennt und zu dem Einzugsspalt 16 zwischen zwei aufrechtstehenden Einzugswalzen 18 fördert, welche das Erntegut in eine Häckseleinrichtung 20 weiterleiten.

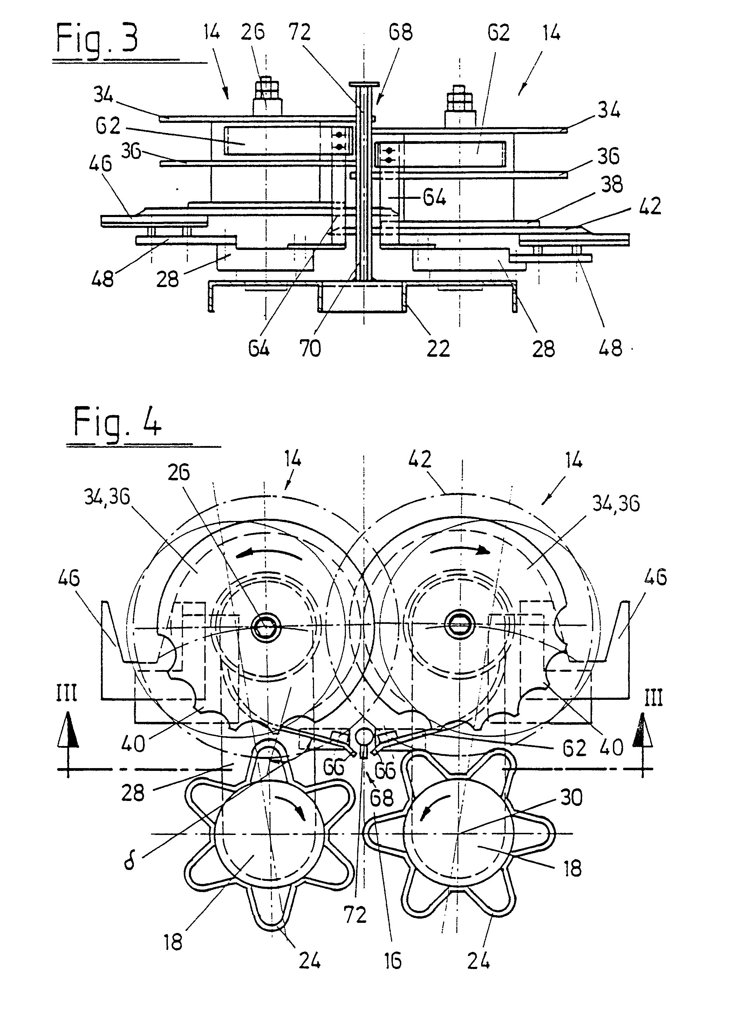

Die beiden Einzugswalzen 18 sind auf einem Grundrahmen 22 der Erntemaschine 10 mit festem Abstand zueinander und gegensinnig antreibbar gelagert; die Drehrichtung ist in Fig. 4 durch Pfeile angedeutet. An der Aussenseite weisen die beiden konischen Einzugswalzen 18 schlaufenartige Mitnehmer 24 auf, wobei die Mitnehmer der gegenüberliegenden Einzugswalze eingreifen und so das geschnittene und von den Aufnahmetrommeln 14 zugeführte Erntegut durch den Einzugsspalt 16 zur Häckseleinrichtung 20 in Zusammenwirken mit den Aufnahmetrommeln weiterfördern.

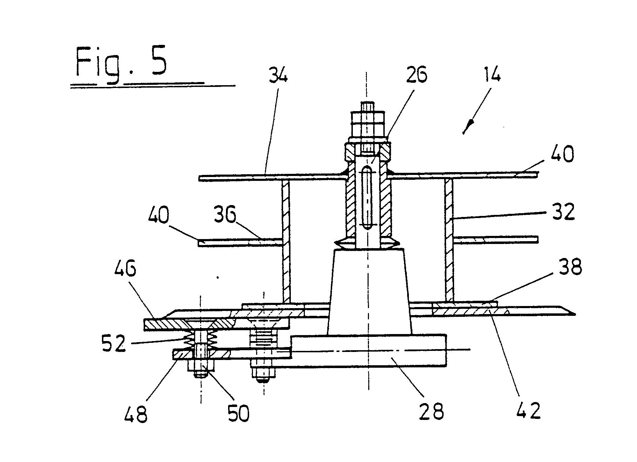

Die beiden Aufnahmetrommeln 14 sind, wie vor allem Fig. 5 zeigt, auf je einer Welle 26 befestigt, die in einem Getriebegehäuse 28 gelagert ist. Jedes der beiden Getriebegehäuse 28 ist um die Drehachse 30 der zugeordneten Einzugswalze 18 verschwenkbar gelagert, so dass der gegenseitige Abstand der beiden Aufnahmetrommeln 14 an den jeweiligen Reihenabstand des Erntegutes angepasst und anschliessend festgestellt werden kann. In den beiden Getriebegehäusen 28 ist das Getriebe für den von der zugeordneten Einzugswalze 18 abgeleiteten Antrieb der Aufnahmetrommel 14 untergebracht; das Getriebe kann als Zahnradgetriebe oder als Ketten- oder Riementrieb ausgebildet sein.

Auf der Trommel 32 jeder Aufnahmetrommel 14 sind axial übereinander und mit Abstand zueinander drei Aufnahmescheiben 34, 36, 38 befestigt. Wie Fig. 3 zeigt, sind die beiden Aufnahmetrommeln 14 in Axialrichtung versetzt zueinander angeordnet, so dass die Aufnahmescheiben der einen Aufnahmetrommel 14 im Überlappungsbereich in den Zwischenraum zwischen den Aufnahmescheiben der anderen Aufnahmetrommel laufen. Die Drehrichtung der beiden Aufnahmetrommeln 14 ist in Fig. 4 eingezeichnet. Die obere Aufnahmescheibe 34 und die mittlere Aufnahmescheibe 36 weisen an ihrem Aussenumfang Mitnehmer 40 auf, wobei der Abstand der Mitnehmer 40 der mittleren Aufnahmescheibe 36 geringer ist als bei der oberen Aufnahmescheibe 34. Die mittlere Aufnahmescheibe 36 dient vor allem dazu, die abgeschnittenen Stengel sicher zu erfassen und in Richtung auf die Einzugswalzen 18 zu fördern, während die obere Aufnahmescheibe 34 die Stengel führen soll.

An der unteren Aufnahmescheibe 38 ist ein Messerstern 42 befestigt. Jedem der beiden Messersterne 42 ist ein Gegenmesser 46 zugeordnet, das auf einem Messerträger 48 durch drei Schrauben 50 und unter Zwischenschaltung von Tellerfedern 52 befestigt ist. Die Befestigung mittels drei Schrauben verhindert unerwünschte Kippbewegungen des Gegenmessers 46. Der Messerträger 48 seinerseits ist am Getriebegehäuse 28 verschraubt. Aus Fig. 4 geht hervor, dass die beiden Gegenmesser 46 an den voneinander wegweisenden Aussenseiten der beiden Aufnahmetrommeln 14 angeordnet sind.

Bei der erfindungsgemässen Erntemaschine 10 ist ferner zwischen der oberen Aufnahmescheibe 34 und der mittleren Aufnahmescheibe 36 jeder Aufnahmetrommel 14 ein Abstreifer 62 angeordnet, der in Draufsicht etwa S-förmig gebogen ist und vom Trommelmantel der Aufnahmetrommel 14 ausgehend in den Einzugsspalt 16 zwischen den beiden Einzugswalzen 18 hineinführt. Jeder Abstreifer 62 ist mit einer Halterung 64 befestigt, die ihrerseits auf dem zugehörigen Getriebegehäuse 28 befestigt ist.

Die freien Enden 66 der beiden Abstreifer 62 bilden einen vertikalen Spalt, zwischen dem, wie vor allem Fig. 4 zeigt, ein Führungsteil 68 vorgesehen ist. Das Führungsteil besteht aus einem aufrechtstehenden Grundkörper 70, der am Grundrahmen 22 befestigt ist, und einer davon abstehenden Fahne 72, die aus dem vertikalen Spalt zwischen den beiden freien Enden 66 der Abstreifer 62 herausragt.

Die S-Form der beiden Abstreifer 62, deren freie Enden 66 entgegen der Fahrtrichtung F nach hinten abgewinkelt auslaufen, ist so gewählt, dass das abgeschnittene und von den beiden Aufnahmescheiben 34 und 36 erfasste und geführte Halmgut aus den beiden nebeneinanderliegenden Aufnahmespalten unter Wirkung des Führungsteils 68 sicher in den Einzugsspalt 16 zusammengeführt wird und diese Zusammenführung erst in einem Bereich erfolgt, in dem die beiden Einzugswalzen 18 das Gut sicher erfassen. Der Winkel δ zwischen den Abstreifern 62 und den Tangenten an den äusseren Kanten der Mitnehmer 40 der beiden Aufnahmescheiben 34 und 36 ist dabei so gewählt, dass er immer grösser ist als 90°.

Die Fahne 72 des Führungsteils 68 verschliesst den vertikalen Spalt zwischen den freien Enden 66 der beiden Abstreifer 62, so dass ein Hineinquetschen des zusammengeführten Halmgutes in diesem Bereich verhindert wird. Wenn zur Anpassung der Erntemaschine 10 an unterschiedliche Reihenabstände des Erntegutes die beiden Aufnahmetrommeln 14 zusammen mit ihren Getriebegehäusen 28 und den an diesen befestigten beiden äusseren Halmteilern 12 um die Drehachsen 30 der beiden Einzugswalzen 18 geschwenkt werden, schwenken die freien Enden 66 der beiden Abstreifer 62 an der Fahne 72 des Führungsteils 68 entlang, wodurch dafür gesorgt ist, dass stets eine wirksame Führungsfläche für das Erntegut vorhanden ist.

## Patentansprüche

1. Mehrreihige Erntemaschine für stengeliges Halmgut, insbesondere für Mais, mit mehreren von Halmteilern (12) gebildeten Aufnahmespalten, in denen abgabeseitig je eine Aufnahmetrommel (14) vorgesehen ist, die wenigstens zwei übereinander angeordnete, mit Mitnehmern (40) ausgerüstete Aufnahmescheiben (34, 36, 38), sowie eine untere Schneideinrichtung (42) für das Halmgut hat, wobei je zwei der Aufnahmetrommel (14) paarweise gegensinnig rotieren und das abgeschnittene und erfasste Halmgut aus zwei nebeneinanderliegenden Aufnahmespalten zusammenführen zu zwei nachgeschalteten, aufrechtstehenden Einzugswalzen (18), die zwischen sich einen Einzugsspalt (16) bilden, und mit einer Abstreifeinrichtung zum Ablösen des erfassten Halmgutes von den Aufnahmescheiben (34, 36, 38), dadurch gekennzeichnet, dass als Abstreifeinrichtung nur zwischen den oberen Aufnahmescheiben (34, 36) jeder Aufnahmetrommel (14) im wesentlichen S-förmig gebogene Abstreifer (62) vorgesehen sind, die vom Mantel der Trommel (32) ausgehen und in den Einzugsspalt (16) hineinführen.

2. Erntemaschine nach Anspruch 1, dadurch gekennzeichnet, dass zwischen den einen vertikalen Spalt bildenden, freien Enden (66) von je zwei Abstreifern (62) im Bereich des Einzugsspaltes (16) ein aus dem Spalt herausragendes, ein geordnetes und freies Zusammenführen der beiden Halmgutströme gewährleistendes Führungsteil (68) vorgesehen ist.

3. Erntemaschine nach Anspruch 2, dadurch gekennzeichnet, dass das Führungsteil (68) aus einem aufrechten Grundkörper (70) und einer davon abstehenden Fahne (72) besteht, die aus dem vertikalen Spalt zwischen den freien Enden (66) der beiden Abstreifer (62) herausragt.

4. Erntemaschine nach einem der Ansprüche 1 bis 3, dadurch gekennzeichnet, dass der Winkel (δ) zwischen dem Abstreifer (62) und den Mitnehmern (40) der zugehörigen Aufnahmescheiben (34, 36) bzw. den Tangenten an die äussere Kante der Mitnehmer (40) immer grösser ist als 90°.

5. Erntemaschine nach einem der vorhergehenden Ansprüche, dadurch gekennzeichnet, dass der Antrieb jeder Aufnahmetrommel (14) von der nachgeschalteten Einzugswalze (18) abgeleitet ist.

## Revendications

1. Récolteuse à plusieurs rangs pour céréales à tiges, en particulier pour le maïs, comprenant plusieurs intervalles de réception formés par des diviseurs de chaumes (12) et dans lesquels est à chaque fois prévu, du côté délivrance, un tambour récepteur (14) présentant au moins deux disques récepteurs superposés (34, 36, 38) équipés d'organes d'entraînement (40) ainsi qu'un dispositif inférieur (42) de sectionnement des céréales, deux respectifs des tambours récepteurs (14) tournant par paires dans des sens opposés et dirigeant conjointement les céréales sectionnées et saisies, à partir de deux intervalles de réception juxtaposés, vers deux cylindres verticaux d'enfournement (18) installés en aval et délimitant entre eux un interstice d'enfournement (16); ainsi qu'un dispositif racleur destiné à détacher des disques récepteurs (34, 36, 38) les céréales saisies, caractérisée par le fait que sont prévus, en tant que dispositif racleur, des racleurs (62) cintrés sensiblement en S, situés seulement entre les disques récepteurs supérieurs (34, 36) de chaque tambour récepteur (14), partant du moyeu (32) de ce tambour et pénétrant dans l'interstice d'enfournement (16).

2. Récolteuse selon la revendication 1, caractérisée par le fait qu'il est prévu au voisinage de l'interstice d'enfournement (16), entre les extrémités libres (66) de deux racleurs respectifs (62) formant un intervalle vertical, une pièce de guidage (68) qui fait saillie au-delà dudit intervalle et garantit un guidage conjoint correct et non entravé des deux flux de céréales en défilement.

3. Récolteuse selon la revendication 2, caractérisée par le fait que la pièce de guidage (68) consiste en un corps de base vertical (70) et en une panne (72), qui fait saillie de ce corps et dépasse au-delà de l'intervalle vertical entre les extrémités libres (66) des deux racleurs (62).

4. Récolteuse selon l'une des revendications 1 à 3, caractérisée par le fait que l'angle (δ) entre le racleur (62) et les organes d'entraînement (40) des disques récepteurs associés (34, 36) ou, respectivement, les tangentes à l'arête externe desdits organes d'entraînement (40), est toujours supérieur à 90°.

5. Récolteuse selon l'une des revendications précédentes, caractérisée par le fait que l'entraînement de chaque tambour récepteur (14) est dérivé du cylindre d'enfournement (18) installé en aval.

## Claims

1. Harvesting machine, arranged in several rows, for stalk-shaped stem material, particularly for maize, comprising several receiving gaps, formed by binder dividers (12), a receiver drum (14), having at least two receiver disks (34, 36, 38), arranged above one another and equipped with drivers (40), and also having a lower cutting device (42) for the stem material, being provided in each of the receiving gaps, two of the receiver drums (14) of any pair rotating in opposite directions and leading the cut and seized stem material from two adjacent receiving gaps together towards two upright entry rollers (18), placed in succession, which form an entry gap (16) between each other, and also comprising a stripping device for detaching the seized stem material from the receiver disks (34, 36, 38), characterised in that the stripping device provided is formed by strippers (62), bent essentially into S-shape, only between the upper receiver disks (34, 36) of each receiver drum (14), these strippers starting from the surface of the drum (32) and leading into the entry gap (16).

2. Harvesting machine according to Claim 1, characterised in that, between the free ends (66) of any two strippers (62), forming a vertical gap, a guide part (68) is provided within the zone of the entry gap (16), this guide part projecting from the gap and ensuring regular and free combination of the two streams of stem material.

3. Harvesting machine according to Claim 2, characterised in that the guide part (68) consists of an upright basic structure (70) and of a vane (72) sticking out from the latter, the vane projecting from the vertical gap between the free ends (66) of the two strippers (62).

4. Harvesting machine according to one of the Claims 1 to 3, characterised in that the angle (δ) between the stripper (62) and the drivers (40) of the associated receiver disks (34, 36) or the tangents on the outer edge of the drivers (40), respectively, always exceeds 90°.

5. Harvesting machine according to one of the preceding claims, characterised in that the drive of any receiver drum (14) is taken from the entry roller (18), placed behind it.

Fig. 1

F

Fig. 2

Fig. 3

Fig. 4

# Fig. 5